# EUROPEAN PATENT SPECIFICATION

(11) **EP 2 690 850 B1**
(45) Date of publication and mention of the grant of the patent: **04.07.2018**
(21) Application number: 13190156.3
(22) Date of filing: 11.01.2008
(51) Int. Cl.: H04M 1/725

(54) **System and method for transmitting a file by use of a throwing gesture to a mobile terminal**
System und Verfahren zum Senden einer Datei mittels Wurfgeste an ein mobiles Endgerät
Système et procédé de transmission d'un fichier par l'utilisation d'un geste de lancer vers un terminal mobile

(30) Priority: 13.07.2007 US 777387
(43) Date of publication of application: 29.01.2014
(62) Divisional of application: 08701445.2
(73) Proprietor: Sony Mobile Communications Inc., Shinagawa-ku Tokyo 140-0002 (JP)
(72) Inventor: Thörn, Ola, 216 12 Limhamn (SE)
(74) Representative: Neij & Lindberg AB

(56) References cited:
- WO-A-2004/062131
- WO-A-2004/075169
- WO-A-2005/076542
- US-A1- 2006 241 864
- US-A1- 2006 256 074

## Description

### TECHNICAL FIELD

The present invention relates generally to a portable electronic device, and more particularly to transmit a file from a portable electronic device.

### BACKGROUND ART

The first commercially attractive mobile telephones or terminals were introduced in the market at the end of the 1980'. Since then, the mobile communication industry has had an enormous development both regarding quality of service and transmission capabilities, as well as the technology for simplifying the handling of the applications within the mobile telephone or terminal. A lot of efforts have been made in making more intuitive handled applications within mobile telephones or terminals. One application or service that is mostly awkward and non intuitive for most users to handle is to share a file on a mobile telephone. To be able to share a file it requires you to firstly turn on Bluetooth/WIFI/IR on your mobile phone, then to browse up the unit you want to connect to and share your file with. You also have to know that the unit you are about to connect with is actually the right one (the names are not always that intuitive). This is especially a problem in an environment with lots of mobile terminals or if you are interacting from some distance. Next step is to select the file you wish to share and finally to send the selected file to the selected terminal.

US2006/256074 A1 involves information exchange systems and methods that allow users of portable devices to initiate exchanges of information with simple gestures.

It also discloses that the technique automatically initiate data exchanges between two devices moved through matching gestures or motions.

WO2004/075169 A comprises a user interface for wireless ad hoc content sharing between portable devices. Communication links are established between two or more portable devices and a visualized shared space on a display area shows content exchange between connected users. Each individual connected user can control transfer of content to and from that user's portable device.

US 2006/241864 A1 provides a method and apparatus for enabling natural and informative physical feedback to users selecting, gaining access to, controlling, or otherwise interfacing with electronic devices within an ubiquitous computing environment.

### SUMMARY OF THE INVENTION

With the above and following description in mind, then an aspect of some embodiments of the present invention is to provide an improved system and a method for sharing/sending/transmitting files in an easy and intuitive way, which seeks to mitigate, alleviate or eliminate one or more of the above-identified deficiencies in the art and disadvantages singly or in any combination.

An aspect of the present invention relates to a method for transmitting a selected file from a transmitting portable electronic device to a receiving personal communication system terminal, according to appended method claim 1. The throwing gesture may be identified by use of an accelerometer, pedometer, camera or video call camera comprised in the transmitting mobile terminal. Further, the throwing gesture may be identified by detecting changes in position of the transmitting mobile terminal by use of GPS positioning or radar.

The step of transmitting the file may further comprise initiating the transmitting process by pressing an option key before making the throwing gesture and finishing the transmitting process by releasing the option key after making the throwing gesture.

The position of mobile terminals nearby the transmitting mobile terminal may be identified by use of a positioning method. The positioning method may comprise one of GPS positioning, radar, Bluetooth signalling, IR signalling, WiFi, GSM, signal strength triangulation or a combination thereof. If the transmitting mobile terminal is positioned indoors the positioning method may also comprise the method of using last known GPS position in combination with an accelerometer, GPS-free indoor location tracking method or Rosum indoor position technology.

Another aspect of the present invention relates to a system for transmitting a selected file between a transmitting portable electronic device and a receiving personal communication system terminal, according to independent system claim 8. The movement detector may comprise an inertial guidance/navigation system for assessing acceleration and direction of the identified throwing gesture. Further, the movement detector may comprise one or a combination of an accelerometer, pedometer, camera or video call camera.

The transmitting mobile terminal may comprise an accelerometer or a camera for assessing a direction of the identified throwing gesture. The movement detector may comprise a gyroscope for assessing direction of the identified throwing gesture.

The transmitting mobile terminal may also comprises an option key suitable as a trigger before making the throwing gesture and after making the throwing gesture.

If the transmitting mobile terminal is positioned indoors the positioning system may comprise a system using last known GPS position in combination with an accelerometer.

The terminology used herein is for the purpose of describing particular embodiments only and is not intended to be limiting of the invention. As used herein, the singular forms of "a", "an" and "the" are intended to include plural forms as well, unless the context clearly indicates otherwise. It should be emphasised that the terms "comprises/comprising" when used in this specification are taken to specify the presence or addition of one or more other features, element, integers, steps, components or groups thereof.

### BRIEF DESCRIPTION OF THE DRAWINGS

Further objects, features and advantages of the present invention will become apparent from the following detailed description of the invention, wherein embodiments of the invention will be described in more detail with reference to the accompanying drawings, in which:
FIG. 1a-d shows a mobile terminal in several embodiments of the invention;
FIG 2 shows a mobile terminal equipped with an inertial guidance/navigation system according to one embodiment of the invention.

### DETAILED DESCRIPTION

Embodiments of the present invention relate to the field of sharing files and, more particularly to the field of sharing files between mobile terminals. A preferred embodiment relates to an application for sharing files between portable electronic devices, such as a mobile telephone phone or terminal. However, it should be appreciated that the invention is as such equally applicable to electronic devices such as a Personal Communication System terminal in the form of a Smartphone that may combine a cellular radiotelephone with data processing, facsimile and data communications capabilities; a personal digital assistant (PDA) or a Pocket PC that can include a radiotelephone, pager, Internet/Intranet access, Web browser, organizer and/or calendar; and a conventional laptop and/or palmtop receiver or other appliance that includes a radiotelephone transceiver. However, for the sake of clarity and simplicity, most embodiments outlined in this specification are related to mobile phones.

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and fully convey to the scope of the invention to those skilled in the art. Like reference signs refer to like elements throughout.

An intuitive way of sharing/sending/transmitting files is if a user who wants to share/send/transmit a file makes a throwing gesture towards another user with whom the user wishes to share/send/transmit the file. The technical solution to achieve this is dependent on several technologies working together.

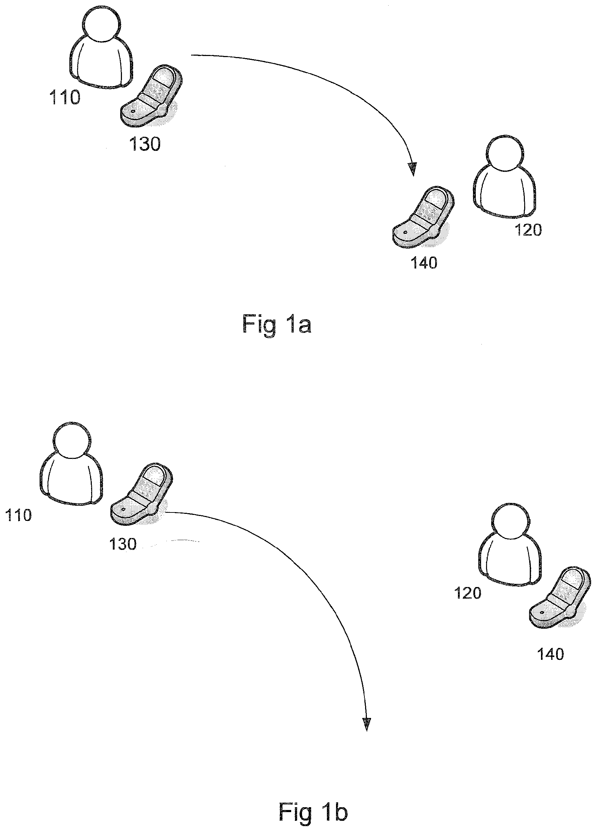

Figs 1a-d illustrates several ways of sharing files between two or more portable electronic devices or mobile terminals by use of a throwing gesture.

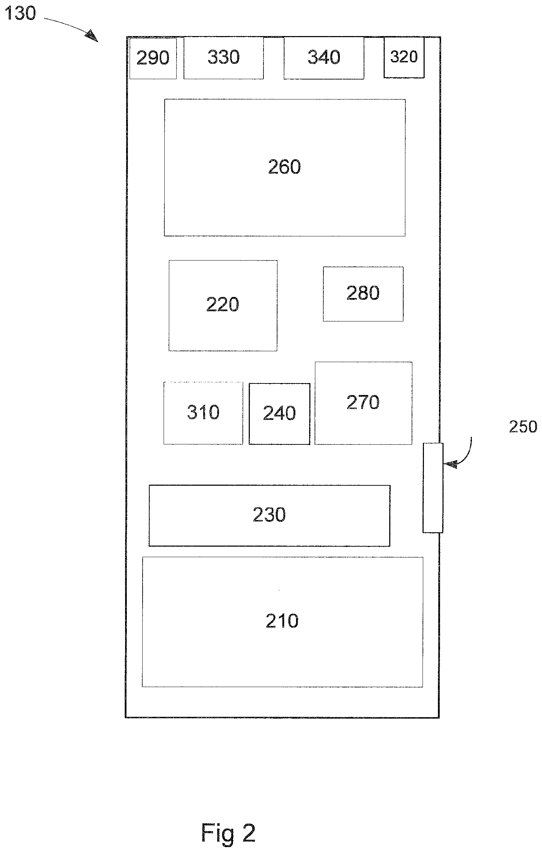

Fig 2 shows schematically a mobile terminal 130 according to the invention comprises a moving detector unit 210, a control unit 220 and a transmitting unit 230, both operatively connected to the moving detector unit 210 and a receiving unit 240. The moving detector unit 210 is adapted to detect and track different changes in both position and motion of the mobile terminal. The control unit 220 is adapted to control the functionality of the mobile terminal in accordance with these detected changes creating different data depending on the type of change, e.g. change of position. The transmitting unit is adapted to share/send/transmit files and the receiving unit is adapted to receive files. The mobile terminal 100 according to the invention may also comprise an option key 250 that may be operatively connected to the moving detector 210 and/or the control unit 220. In Fig 2, the means for moving the mobile terminal 100 is the hand of the user.

The mobile terminal 100 according to the invention may also comprise a display 260 and/or a key pad 270, a battery 280, an antenna 290, a radio unit 310, a loudspeaker 320, a microphone 330, and a camera 340, as shown in Fig 2, but this is known technology and will not be explained in further detail. All of these components may of course be located at any other suitable position in relation to each other but these relative positioning in the mobile terminal is of no importance for the invention and will not be explained any further.

In one embodiment, a user selects a file, such as a picture, a message, e-payments or the like, gets a good grip of the mobile terminal, and makes a throwing gesture towards a desired receiver of the selected file. The term "throwing gesture" is intended to describe a manner of simulating the propelling of an object through the air by swinging the arm and making a simulated gesture of forwarding the object in a direction towards an intended receiver, such as throwing a ball through the air. There are several ways of throwing things through the air, such as throwing a Frisbee, a javelin, a basket ball among others. Each throw has a specific path, depending on what and how the user throws. The throwing gesture is detected and converted into analogue/digital signals by the moving detector unit. The signals are then transferred and used by the control unit 220 to control/steer the functionality of the mobile terminal in accordance therewith.

The moving detector unit 210 may comprise an inertial guidance/navigation system which detects the velocity, acceleration and/or direction of the throwing gesture by use of one or several accelerometers or a camera 230 and/or gyroscopes.

The inertial guidance/navigation system integrates the information gathered from the combination of gyroscopes and accelerometers or camera in order to determine the current state of the system.

Gyroscopes measure the angular velocity of the system, in this case the mobile terminal, in the inertial reference frame, in this case the courtyard, room or other well defined spaces. Based on this information, the direction is known but not the velocity of the system.

Accelerometers measure the linear acceleration of the system in the inertial reference frame, but in directions that can only be measured relative the moving system, in this case the mobile terminal. The accelerometers may be replaced by a camera and a software solution for enabling real-time motion-control.

However, by detecting both the current angular velocity of the system and the current linear acceleration of the system measured relative to the moving system, it is possible to determine the linear acceleration of the system in the inertial reference frame.

By performing integration/calculation on the inertial accelerations (using the original velocity) using the kinematical equations yields the inertial velocity of the mobile terminal and integration/calculation again (using the original position) yields the inertial position of the mobile terminal.

As an example, if the initial direction is known, as the position of the receiver, the initial velocity is known, the velocity of the throwing gesture, and if it is possible to keep track of both how the terminal would turn, accelerate and decelerate, is it possible to calculate the current orientation, position and velocity the terminal would have had if they were thrown away for real.

The method according the present invention comprises following steps:
1. Identifying the positions of the units outdoor and indoors
2. Receiving the positions of other units in vicinity to the present unit
3. Identifying a throwing gesture
4. Identifying the direction of the throwing gesture
5. Sending/transmitting a selected file

The identification of the position of units outdoor and indoors may be performed in several different ways.

In identification of positions outdoors, following alternatives may be used:
- each mobile terminal may use GPS positioning;
- mobile terminals, which are connected to certain tele base stations, may turn on Bluetooth/WiFi and/or sharing via internet via an event from the base station and/or acknowledge units that are close to each other;
- the signal strength may be used to provide the correct position on where a unit is as means for e.g. accounting where there are buildings;
- triangulation of signals from other units via Bluetooth/WIFI and/or base stations, e.g. GSM; or
- a WiFi-based location platform, called PlaceEngine, has been developed where the WiFi signal information is used as a location detection method. This method may be used to estimate the position of mobile device's both indoor and outdoors.

In identification of positions indoors, following alternatives may be used:
- each mobile terminal may use GPS positioning;
- the position of each mobile terminal may be identified by using Rosum indoor position technology, or similar;
- the position may be computed using GPS-free indoor location tracking method, which has been developed and that provides knowledge of the geometric location nodes in a MANET (mobile ad hoc network) using RSSI (received signal strength indication);
- the signal strength may be used to provide the correct position on where a unit is as means for e.g. accounting if a unit is in a room or where there is a wall;
- triangulation of signals from other units via Bluetooth /WIFI and/or base stations, e.g. GSM may also be used to provide the position of the units;
- the method using PlaceEngine, as described above, may be used to estimate the position of mobile device's;
- radar may be used to identify the position of the unit and detect where there are walls and use this information to account for which units that are in the vicinity; or
- the last known GPS position in combination with an accelerometer or a camera may be used to be able to backtrack positions on the basis of distance walked.

The method according to the invention uses one or several in combination of these technologies to identify the position of the units.

Further, receiving positions of units in vicinity may be done in several different ways, such as:
- the position may be sent via internet (GPRS/HSDPA) to a server that automatically broadcasts to units that are within throw range, based on distance in database accounting for buildings, acknowledge units that they are close to each other; or
- all mobile terminals within Bluetooth/WIFI range may send their position to each other, which means that the user knows his position relative to other mobile terminals.

The identification of a throwing gesture may be performed by using an accelerometer or pedometer. Additionally, the mobile terminal may be using its camera or video call camera to detect motion, a throwing gesture. Further alternative may be to use GPS to identify a throwing gesture since a throwing gesture is changes, such as motion and/or altitude changes in a direction, of position of the mobile terminal. Radar may also be used to identify a throwing gesture as detection of motion of the mobile terminal.

Further, the direction of the throwing gesture may be identified by using an accelerometer or pedometer. Additionally, the mobile terminal may be using its camera or video call camera to detect motion and thus estimate the direction of the throwing gesture. Further alternative may be to use GPS to estimate the direction of the throwing gesture since a throwing gesture is a change, such as motion and/or altitude changes in a direction, of position of the mobile terminal. Radar may also be used to estimate the direction of the throwing gesture by using its ability to detect motion of the mobile terminal.

In one embodiment the file is sent at the end of the throwing gesture, via GPRS/HSDPA and/or Bluetooth/WiFi. In another embodiment the file is sent when the end of the throwing gesture is trigged with a specific ending movement, which is identified by means of a camera, video call camera, accelerometer or pedometer, GPS or WiFi. In one embodiment the ending movement is a typical stop movement or a slowing down of the throwing gesture. In another embodiment the end movement is a trigger action, such as pushing a button or releasing a button. In a further embodiment the end movement is a tilting movement of the mobile terminal in a certain direction.

The users may configure their own throwing gestures and end movements. As an example, if the user likes to throw Frisbees, the user might configure the throwing gesture and end movement as if the user where throwing a Frisbee. The user may also add specific sound effects, both on the throwing gesture and on the end movement.

Moreover, the actual direction of the throwing gesture is not used when assessing the throw but merely using the movement of a throwing gesture and vicinity information for e.g. sending a file to a computer or someone in the contact list in the mobile terminal.

In one embodiment it is possible to send to several units if they are closely positioned.

Several different technical solutions with varying accuracy, such as that the user actually hits the right person, security, such as certain files may requiring better accuracy, e.g. DRM protected, or files that requires privacy, may be used.

The arrows in fig 1a-d not directly associated with numerals shows schematically movements simulated by the user's hand.

In a first embodiment of the invention, as shown in fig 1a, a person, a user 110, wants to share or send a picture, a file, to another person, a receiver 120. Initially, the user 110 selects a file in a mobile phone 130. Further, the user 110 makes a throwing gesture with the mobile phone 130 towards the receiver 120. As the event is triggered, the user may hear a sound, e.g. "swoosh" and/or may feel a tactile feedback in the mobile phone 130. The mobile phone 140 of the receiver 120 may vibrate and the receiver may hear a sound like the receiver catches a ball (timed like a real physical throw towards the user).

If a user 110 "misses the target", as shown in fig 1b, the user 110 and/or the receiver 120 may e.g. hear a crashing sound. The receiver 120 gets a message about whether the receiver 120 would like to "pick up", accept, the file or not. If the receiver presses yes, the file is transmitted to the mobile phone 140.

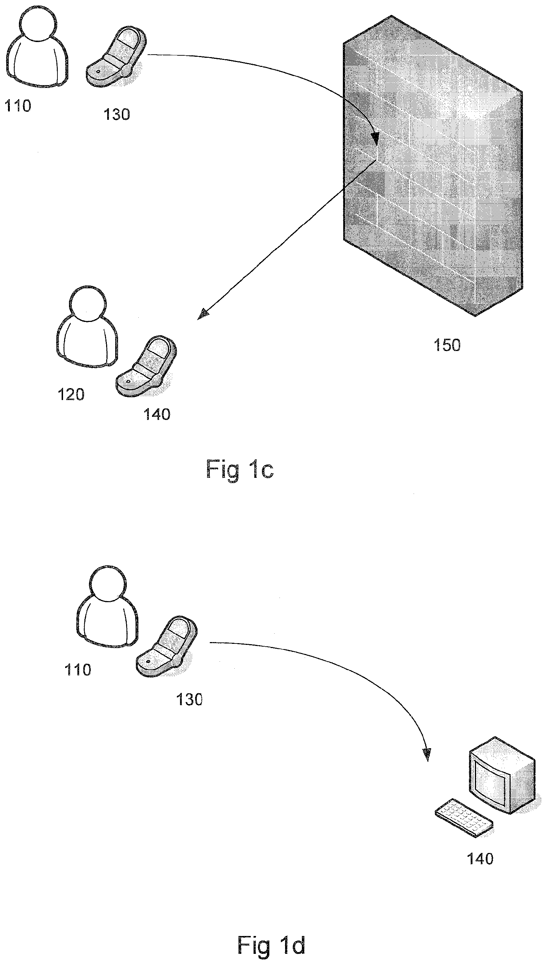

In another embodiment of the invention the user is positioned in vicinity of a building, as shown in fig 1c. Initially, a user 110 selects a file and makes a throwing gesture with the mobile phone towards the wall 130 on the building. The user may hear a bouncing sound as the file "hits" the wall and then continues to the friend 120.

In yet another embodiment of the invention the user wants to transfer a file from the mobile phone to a computer nearby, as shown in fig 1d. Initially, a user 110 select a file, makes a throwing gesture with the mobile phone 130 towards the computer 140. The computer blinks to confirm that the file has been transferred.

## Claims

1. A method for transmitting a selected file from a transmitting portable electronic device (130) to a receiving personal communication system terminal (140), comprising the steps of:
- identifying a position of said transmitting portable electronic device (130);
- identifying positions of personal communication system terminals which are nearby said transmitting portable electronic device (130) by use of said identified position of said transmitting portable electronic device (130);
- identifying a throwing gesture of said transmitting portable electronic device (130);
- identifying a direction, velocity and acceleration of said throwing gesture;
- identifying said receiving personal communication system terminal (140) by use of said identified direction, velocity and acceleration of said throwing gesture and said identified positions of personal communication system terminals nearby; and
- transmitting said file to said identified receiving personal communication system terminal (140).

2. The method according to any of claim 1, wherein said throwing gesture is identified by use of an accelerometer, pedometer, camera or video call camera comprised in said transmitting portable electronic device (130).

3. The method according to claim 1, wherein said throwing gesture is identified by detecting changes in position of said transmitting portable electronic device (130) by use of GPS positioning or radar.

4. The method according to claim 1, wherein said step of transmitting said file further comprises initiating said transmitting process by pressing an option key (250) before making said throwing gesture and finishing said transmitting process by releasing said option key after making said throwing gesture.

5. The method according to claim 1, wherein said step of identifying the position of personal communication system terminals nearby said transmitting portable electronic device (130) is performed by use of a positioning method.

6. The method according to claim 5, wherein said transmitting portable electronic device (130) is positioned indoors and said positioning method comprises one of the methods of using last known GPS position in combination with an accelerometer, GPS-free indoor location tracking method or Rosum indoor position technology.

7. The method according to any of claims 1-6, wherein said transmitting portable electronic device is a mobile terminal.

8. A system for transmitting a selected file between a transmitting portable electronic device (130) and a receiving personal communication system terminal (140) by use of a throwing gesture, wherein said transmitting portable electronic device comprises:
- a control unit (220);
- a movement detector unit (210) that is operatively connected to said control unit; and
- a positioning system; wherein said positioning system is adapted to identify a position of said transmitting portable electronic device (130) and to identify positions of personal communication system terminals which are nearby said transmitting portable electronic device (130) by use of said identified position of said transmitting portable electronic device (130);
wherein said movement detector unit is adapted to identify said throwing gesture and to identify a direction, velocity and acceleration of said throwing gesture,
wherein said positioning system is adapted to identify the receiving personal communication system terminal based on said identified direction, velocity and acceleration of said throwing gesture and said identified positions of personal communication system terminals nearby, and wherein said control unit is adapted to transmit said file from said transmitting portable electronic device to said identified receiving personal communication system terminal in accordance with said identified throwing gesture.

9. The system according to claim 8, wherein said movement detector unit (210) comprises an inertial guidance/navigation system for assessing said acceleration and direction of said identified throwing gesture.

10. The system according to claim 8, wherein said movement detector unit (210) comprises one or a combination of an accelerometer, pedometer, camera or video call camera.

11. The system according to claim 8, wherein said transmitting portable electronic device (130) comprises an accelerometer or a camera for assessing said direction of said identified throwing gesture.

12. The system according to claim 8, wherein said movement detector comprises a gyroscope for assessing said direction of said identified throwing gesture.

13. The system according to claim 8, wherein said transmitting portable electronic device (130) comprises an option key (250) suitable as a trigger before making said throwing gesture and after making said throwing gesture.

14. The system according to claim 8, wherein said transmitting portable electronic device (130) is positioned indoors and said positioning system comprises one of a system using last known GPS position in combination with an accelerometer, a GPS-free indoor location tracking system or Rosum indoor position system.

15. The system according to any of claims 8-14, wherein said transmitting portable electronic device is a mobile terminal.

## Patentansprüche

1. Verfahren zum Senden einer ausgewählten Datei von einer sendenden tragbaren elektronischen Vorrichtung (130) an ein empfangendes persönliches Kommunikationssystemendgerät (140), umfassend die folgenden Schritte:
- Identifizieren einer Position der sendenden tragbaren elektronischen Vorrichtung (130);
- Identifizieren von Positionen von persönlichen Kommunikationssystemendgerät, welche in der Nähe der sendenden tragbaren elektronischen Vorrichtung (130) sind, durch Verwenden der identifizierten Position der sendenden tragbaren elektronischen Vorrichtung (130);
- Identifizieren einer Werfgeste der sendenden tragbaren elektronischen Vorrichtung (130);
- Identifizieren einer Richtung, Geschwindigkeit und Beschleunigung der Werfgeste;
- Identifizieren des empfangenden persönlichen Kommunikationssystemendgeräts (140) durch Verwenden der identifizierten Richtung, Geschwindigkeit und Beschleunigung der Werfgeste und der identifizierten Positionen der persönlichen Kommunikationssystemendgeräte in der Nähe; und
- Senden der Datei an das identifizierte empfangende persönliche Kommunikationssystemendgerät (140).

2. Verfahren nach einem des Anspruchs 1, wobei die Werfgeste durch Verwendung eines Beschleunigungsmessers, eines Schrittzählers, einer Kamera oder einer Videoanrufkamera identifiziert wird, der/die in der sendenden tragbaren elektronischen Vorrichtung (130) enthalten ist.

3. Verfahren nach Anspruch 1, wobei die Werfgeste durch Erkennen von Änderungen der Position der sendenden tragbaren elektronischen Vorrichtung (130) durch Verwendung von GPS-Positionsbestimmung oder Radar identifiziert wird.

4. Verfahren nach Anspruch 1, wobei der Schritt des Sendens der Datei ferner ein Einleiten des Sendeprozesses durch Drücken einer Funktionstaste (250) vor dem Ausführen der Werfgeste und Beenden des Sendeprozesses durch Freigeben der Funktionstaste nach dem Ausführen der Werfgeste umfasst.

5. Verfahren nach Anspruch 1, wobei der Schritt des Identifizierens der Position von persönlichen Kommunikationssystemendgeräten in der Nähe der sendenden tragbaren elektronischen Vorrichtung (130) durch Verwendung eines Positionsbestimmungsverfahrens durchgeführt wird.

6. Verfahren nach Anspruch 5, wobei die sendende tragbare elektronische Vorrichtung (130) in einem Innenraum positioniert ist, und das Positionsbestimmungsverfahren eines der Verfahren von Verwenden der letzten bekannten GPS-Position in Kombination mit einem Beschleunigungsmesser, einem GPS-freien Innenraum-Aufenthaltsverfolgungsverfahren oder einer Rosum-Innenraum-Positionstechnologie umfasst.

7. Verfahren nach einem der Ansprüche 1-6, wobei es sich bei der sendenden tragbaren elektronischen Vorrichtung um ein mobiles Endgerät handelt.

8. System zum Senden einer ausgewählten Datei zwischen einer sendenden tragbaren elektronischen Vorrichtung (130) und einem empfangenden persönlichen Kommunikationssystemendgerät (140) durch Verwendung einer Werfgeste, wobei die sendende tragbare elektronische Vorrichtung umfasst:
- eine Steuereinheit (220);
- eine Bewegungsdetektoreinheit (210), die funktionell mit der Steuereinheit verbunden ist; und
- ein Positionsbestimmungssystem;
wobei das Positionsbestimmungssystem so ausgelegt ist, dass es eine Position der sendenden tragbaren elektronischen Vorrichtung (130) identifiziert und Positionen von persönlichen Kommunikationssystemendgeräten in der Nähe der sendenden tragbaren elektronischen Vorrichtung (130) durch Verwendung der identifizierten Position der sendenden tragbaren elektronischen Vorrichtung (130) identifiziert; wobei die Bewegungsdetektoreinheit so ausgelegt ist, dass sie die Werfgeste identifiziert und eine Richtung, Geschwindigkeit und Beschleunigung der Werfgeste identifiziert; wobei das Positionsbestimmungssystem so ausgelegt ist, dass es das empfangende persönliche Kommunikationssystemendgerät basierend auf der identifizierten Richtung, Geschwindigkeit und Beschleunigung der Werfgeste und der identifizierten Positionen nahegelegener persönlicher Kommunikationssystemendgeräte identifiziert; und
- wobei die Steuereinheit so ausgelegt ist, dass sie die Datei von der sendenden tragbaren elektronischen Vorrichtung gemäß der identifizierten Werfgeste an das identifizierte empfangende persönliche Kommunikationssystemendgerät sendet.

9. System nach Anspruch 8, wobei die Bewegungsdetektoreinheit (210) ein Trägheitslenkungs-/- navigationssystem zum Feststellen der Beschleunigung und Richtung der identifizierten Werfgeste umfasst.

10. System nach Anspruch 8, wobei die Bewegungsdetektoreinheit (210) eines von einem Beschleunigungsmesser, einem Schrittzähler, einer Kamera oder einer Videoanrufkamera oder eine Kombination davon umfasst.

11. System nach Anspruch 8, wobei die sendende tragbare elektronische Vorrichtung (130) einen Beschleunigungsmesser oder eine Kamera zum Feststellen der Richtung der identifizierten Werfgeste umfasst.

12. System nach Anspruch 8, wobei der Bewegungsdetektor ein Gyroskop zum Feststellen der Richtung der identifizierten Werfgeste umfasst.

13. System nach Anspruch 8, wobei die sendende tragbare elektronische Vorrichtung (130) eine Funktionstaste (250) umfasst, die als ein Auslöser vor dem Ausführen der Werfgeste und nach dem Ausführen der Werfgeste geeignet ist.

14. System nach Anspruch 8, wobei die sendende tragbare elektronische Vorrichtung (130) in einem Innenraum positioniert ist, und das Positionsbestimmungssystem eines von einem System, das die letzte bekannte GPS-Position in Kombination mit einem Beschleunigungsmesser verwendet, einem GPS-freien Innenraum-Aufenthaltsverfolgungssystem oder einem Rosum-Innenraum-Positionssystem umfasst.

15. System nach einem der Ansprüche 8-14, wobei es sich bei der sendenden tragbaren elektronischen Vorrichtung um ein mobiles Endgerät handelt.

## Revendications

1. Procédé de transmission d'un fichier sélectionné depuis un dispositif électronique mobile de transmission (130) vers un terminal de système de communication personnel de réception (140), comprenant les étapes qui consistent :
- à identifier une position dudit dispositif électronique mobile de transmission (130) ;
- à identifier des positions de terminaux de système de communication personnel qui sont à proximité dudit dispositif électronique mobile de transmission (130) par l'utilisation de ladite position identifiée dudit dispositif électronique personnel mobile de transmission (130) ;
- à identifier un geste de lancer dudit dispositif électronique mobile de transmission (130) ;
- à identifier une direction, une vitesse et une accélération dudit geste de lancer ;
- à identifier ledit terminal de système de communication personnel de réception (140) en utilisant lesdites direction, vitesse et accélération identifiées dudit geste de lancer et lesdites positions identifiées de terminaux de système de communication personnel avoisinants ; et
- à transmettre ledit fichier audit terminal de système de communication personnel de réception (140) identifié.

2. Procédé selon l'une quelconque de la revendication 1, dans lequel ledit geste de lancer est identifié par l'utilisation d'un accéléromètre, d'un podomètre, d'une caméra ou d'une caméra d'appel vidéo compris dans ledit dispositif électronique mobile de transmission (130).

3. Procédé selon la revendication 1, dans lequel ledit geste de lancer est identifié par la détection de changements de la position dudit dispositif électronique mobile de transmission (130) par l'utilisation d'un positionnement GPS ou d'un radar.

4. Procédé selon la revendication 1, dans lequel ladite étape de transmission dudit fichier comprend en outre le fait d'initier ledit processus de transmission en appuyant sur une touche option (250) avant d'effectuer ledit geste de lancer et de mettre fin audit processus de transmission en libérant ladite touche option après avoir effectué ledit geste de lancer.

5. Procédé selon la revendication 1, dans lequel ladite étape d'identification de la position de terminaux de système de communication personnel à proximité dudit dispositif électronique mobile de transmission (130) est effectuée par l'utilisation d'un procédé de positionnement.

6. Procédé selon la revendication 5, dans lequel ledit dispositif électronique mobile de transmission (130) est positionné à l'intérieur et ledit procédé de positionnement comprend l'un des procédés suivants : l'utilisation de la dernière position GPS connue en combinaison avec un accéléromètre, un procédé de suivi d'emplacement intérieur sans GPS ou une technologie de Rosum de positionnement en intérieur.

7. Procédé selon l'une quelconque des revendications 1 à 6, dans lequel ledit dispositif électronique mobile de transmission est un terminal mobile.

8. Système de transmission d'un fichier sélectionné entre un dispositif électronique mobile de transmission (130) et un terminal de système de communication personnel de réception (140) par l'utilisation d'un geste de lancer, dans lequel ledit dispositif électronique mobile de transmission comprend :
- une unité de commande (220) ;
- une unité de détection de mouvement (210) qui est reliée de manière fonctionnelle à ladite unité de commande ; et
- un système de positionnement ;
dans lequel ledit système de positionnement est adapté pour identifier une position dudit dispositif électronique mobile de transmission (130) et pour identifier des positions de terminaux de système de communication personnel qui sont à proximité dudit dispositif électronique mobile de transmission (130) au moyen de ladite position identifiée dudit dispositif électronique mobile de transmission (130) ;
dans lequel ladite unité de détection de mouvement est adaptée pour identifier ledit geste de lancer et pour identifier une direction, une vitesse et une accélération dudit geste de lancer ;
dans lequel ledit système de positionnement est adapté pour identifier le terminal de système de communication personnel de réception sur la base desdites direction, vitesse et accélération identifiées dudit geste de lancer et desdites positions identifiées de terminaux de système de communication personnel avoisinants ; et
dans lequel ladite unité de commande est adaptée pour transmettre ledit fichier depuis ledit dispositif électronique mobile de transmission vers ledit terminal de système de communication personnel de réception identifié en fonction dudit geste de lancer identifié.

9. Système selon la revendication 8, dans lequel ladite unité de détection de mouvement (210) comprend un système de guidage/navigation par inertie pour évaluer lesdites accélération et direction dudit geste de lancer identifié.

10. Système selon la revendication 8, dans lequel ladite unité de détection de mouvement (210) comprend un élément parmi un accéléromètre, un podomètre, une caméra ou une caméra d'appel vidéo ou une combinaison de ceux-ci.

11. Système selon la revendication 8, dans lequel ledit dispositif électronique mobile de transmission (130) comprend un accéléromètre ou une caméra pour évaluer ladite direction dudit geste de lancer identifié.

12. Système selon la revendication 8, dans lequel ledit détecteur de mouvement comprend un gyroscope pour évaluer ladite direction dudit geste de lancer identifié.

13. Système selon la revendication 8, dans lequel ledit dispositif électronique mobile de transmission (130) comprend une touche option (250) utilisable comme déclencheur avant d'effectuer ledit geste de lancer et après avoir effectué ledit geste de lancer.

14. Système selon la revendication 8, dans lequel ledit dispositif électronique mobile de transmission (130) est positionné à l'intérieur et ledit système de positionnement comprend l'un parmi un système utilisant la dernière position GPS connue en combinaison avec un accéléromètre, un système de suivi d'emplacement intérieur sans GPS ou un système de Rosum de positionnement en intérieur.

15. Système selon l'une quelconque des revendications 8 à 14, dans lequel ledit dispositif électronique mobile transmission est un terminal mobile.
